(19) Europäisches Patentamt

European Patent Office

Office européen des brevets

(11) Veröffentlichungsnummer: **0 253 149 B1**

## (12) EUROPÄISCHE PATENTSCHRIFT

(45) Veröffentlichungstag der Patentschrift: **30.12.92**

(21) Anmeldenummer: **87108752.4**

(22) Anmeldetag: **19.06.87**

(51) Int. Cl.5: **B29C 43/50**, B29C 43/24, //B29L7:00

(54) **Verfahren zum Herstellen von Kunststoffolien, insbesondere PVC-Folien, durch Kalandrieren.**

(30) Priorität: **16.07.86 DE 3623936**

(43) Veröffentlichungstag der Anmeldung:
**20.01.88 Patentblatt 88/03**

(45) Bekanntmachung des Hinweises auf die
Patenterteilung:
**30.12.92 Patentblatt 92/53**

(84) Benannte Vertragsstaaten:
**AT CH DE FR IT LI NL**

(56) Entgegenhaltungen:
**EP-A- 0 172 924        CH-A- 258 371
DE-A- 1 479 904        DE-A- 1 504 199
DE-A- 2 204 426        FR-A- 2 294 821
US-A- 3 121 915        US-A- 3 893 879**

**KUNSTSTOFFE, Band 74, Nr. 11, November
1984, Seiten 662-666, München, DE; W. WÖK-
KENER: "Technische Entwicklungen bei
Kunststoff-Kalandern"**

(73) Patentinhaber: **HERMANN BERSTORFF Maschinenbau GmbH
An der Breiten Wiese 3/5
W-3000 Hannover 61(DE)**

(72) Erfinder: **Stockmeyer, Hans, Dipl.-Ing.
Rosmarinweg 3
W-3004 Isernhagen 5(DE)**

EP 0 253 149 B1

**Beschreibung**

Die Erfindung betrifft ein Verfahren gemäß dem Oberbegriff des Patentanspruchs.

Aus der DE-OS 22 04 426 ist bekannt, daß beim Auflaufen der Folie vom Kalander auf Abzugswalzen Wachs und andere Absonderungen von der PVC-Folie auf die Abzugswalzen abgegeben werden.

Derartige Ablagerungen auf den Abzugswalzen werden ab einer bestimmten Schichtdicke auf die Folie übertragen und erzeugen Kondensatflecke darauf, was in der Fachwelt als sogenannter "Plate-out-Effekt" bekannt ist.

In der genannten DE-OS 22 04 426 wird daher vorgeschlagen, eine mit einem gutabsorbierenden Papier überzogene zusätzliche Metallwalze vorzusehen, die direkt an die Abzugswalze (ohne dazwischen laufende Folie) gedrückt und von der Abzugswalze mitgeschleppt wird. Mittels des absorbierenden Papiers wird die Abzugswalze vom Kondensat befreit, wodurch eine Verunreinigung der über die Abzugswalze laufenden Folie durch Kondensatablagerungen vermieden wird.

Ein derartiges Verfahren setzt voraus, daß die mit absorbierendem Papier überzogene Metallwalze relativ oft ausgewechselt wird, um die Absorptionswirkung des Papiers zu erhalten, was sehr umständlich und verbessungsbedürftig ist.

Aus der EP 0 172 924 A2 ist bekannt, bahnförmiges Material durch Aufblasen von Druckluft in engen Kontakt mit gekühlten Walzen zu halten. Gezeigt wird die Herstellung einer sogenannten Gießfolie, die unmittelbar nach dem Austritt aus einer Breitschlitzdüse mittels einer Luftdüse gegen eine Kühlwalze gehalten wird.

Weiterhin ist aus der US-PS 3,893,879 eine Einrichtung bekannt zum Herstellen einer gewellten Mehrschichtfolie, die mittels Druckluftdüsen gegeneinander und gegen eine Walze gepreßt wird.

Eine Verhinderung von Kondensatflecken auf Folien wird in diesen Entgegenhaltungen nicht angesprochen.

Aus der DE-A-1 479 904 ist eine Luftdüse an einen Kühlwalze bekannt. Dort wird die Ablagerung der flüchtigen Bestandteile durch eine Druckwalze die gegen der Kühlwalze gepreßt wird, vermieden.

Es ist die Aufgabe der Erfindung, ein Verfahren vorzuschlagen, zum Herstellen von Kunststoffolien, insbesondere PVC-Folien, durch Kalandrieren.

Die Aufgabe wird durch die im kennzeichnenden Teil des Anspruchs niedergelegten Merkmale gelöst.

Es hat sich gezeigt, daß die Kondensatflecken auf der Folie dann unterbunden werden, wenn die vom Kalander kommende, relativ schnell laufende Folienbahn mittels Druckluft in direktem Kontakt und ohne Ausbildung einer Luftschicht zwischen dem Mantel der Abzugswalze und der Folie, auf dem Mantel einer der, eine niedrigere Temperatur aufweisenden Abzugswalze gehalten wird.

Die Abkühlung der den Kalander verlassenden Folienbahn auf einer der Abzugswalze erfolgt durch Schaffung eines direkten Kontaktes der Folie mit dem Mantel der Abzugswalze, wobei der Verdampfungs- und Kondensationstemperaturbereich der flüchtigen Bestandteile an der Kunststoffoberfläche schnell durchlaufen wird.

Wenn die Folienbahn diese kritische Temperaturphase, in der die Kondensatbildung auftritt, schnell durchläuft, wird die Kondensatbildung fast ganz verhindert. Üblicherweise läuft die Folie mit einer Geschwindigkeit von 60 - 80 m/Min. vom Kalander auf die Abzugswalzen. Durch die Anpressung der Folie an den Mantel der Abzugswalze wird bei dieser Foliengeschwindigkeit die Ausbildung einer isolierenden Luftschicht zwischen der Folie und dem Abzugswalzenmantel verhindert. Es wird somit ein direkter Kontakt mit den ersten Walzen des Abzuges in kürzester Zeit verwirklicht, wodurch eine rasche Abkühlung unterhalb der Kondensationstemperatur erreicht wird.

Reinigungseinrichtungen für die Abzugswalzen und für die Folie erübrigen sich. Aber auch Absaugeinrichtungen unterhalb der Abzugswalzen für verdampfende Bestandteile der vom Kalander kommenden Folie werden nicht mehr benötigt.

Eine für die Durchführung des Verfahrens besonders geeignete Vorrichtung weist eine über die gesamte Länge der Abzugswalze reichende Luftdüse mit angeschlossener Druckluftquelle auf, wobei die längliche Düseöffnung möglichst unmittelbar über dem Auflaufpunkt der Folienbahn auf die Abzugswalze angeordnet ist, um zum einen das Einziehen einer isolierenden Luftschicht zwischen der Folienbahn und dem Abzugswalzenmantel zu verhindern und zum anderen, um einen besseren Kontakt der Folie zu den eine niedrigere Temperatur aufweisenden Abzugswalzen herzustellen, wodurch schnell gekühlt wird und Kondensatflecke verhindert werden.

Ein Ausführungsbeispiel einer Einrichtung zur Durchführung des Verfahrens wird in schematisierter Form in der Zeichnung dargestellt und nachfolgend erläutert.

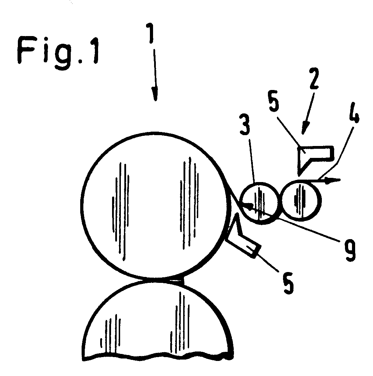

In Fig. 1 wird in schematisierter Form ein Kalander 1 mit Luftdüsen 5 an der Abzugseinrichtung 2 gezeigt.

Die Abzugswalzen 3 werden jeweils wechselseitig umschlungen. Danach wird die Folie 4 einer Streckeinrichtung zugeführt. Abzugswalzen 3 werden mittels bekannter Einrichtungen auf die jeweils gewünschte Temperatur gebracht.

An den Luftdüsen 5 ist eine nicht gezeigte Druckluftquelle angeschlossen. Bei der ersten Abzugswalze ist die Luftaustrittsöffnung der Düse auf den Auflaufpunkt 9 der Folie 4 auf die Abzugswalze 3 gerichtet.

In Versuchen auf einem Kalander wurden folgende Ergebnisse erzielt.

Die Kalanderwalzen wiesen einen Durchmesser von 650 mm auf. Die Abzugseinrichtung 2 bestand aus waagerecht, in Höhe der obersten Kalanderwalze, angeordneten Abzugswalzen 3, mit einem Durchmesser von 150 mm. Die Abzugswalzen 3 wiesen übliche Einrichtungen für eine Temperierung der Walzenmäntel auf.

Auf dem Kalander wurde eine weich eingestellte S-PVC-Folie mit einem K-Wert von 65 hergestellt.

Bei einem Versuch gemäß dem Stand der Technik wies die Folie nach Verlassen der letzten Kalanderwalze eine Temperatur von 192° C auf. Der Mantel der ersten Abzugswalze hatte eine Temperatur von 165° C. Die Folie lief ohne Anpressen mittels Druckluft mit 75 m/Min. um die Abzugswalze und hatte nach Verlassen der Abzugswalze eine Temperatur von 185° C. Es trat eine erhebliche Kondensatbildung auf, so daß die Abzugswalze eine nasse Oberfläche aufwies.

In einem weiteren Versuch nach dem erfindungsgemäßen Verfahren wurde über die Breite der ersten bzw. auch der zweiten Abzugswalze Druckluft aus einer Düse gegen die auf der Abzugswalze laufende Folie geblasen, zwecks Herstellung eines direkten Kontaktes ohne isolierende Luftschicht zwischen der Folie und der schnell laufenden Abzugswalze, die eine Temperatur von 165° C aufwies. Nach Verlassen der ersten Abzugswalze war die Folie auf eine Temperatur von 170° C heruntergekühlt worden.

Durch das Anpressen der Folie mittels der Druckluft auf eine der Abzugswalzen wurde die Ausbildung einer Luftschicht zwischen dem Mantel dieser Abzugswalze und der Folie vermieden und eine Herunterkühlung der Folienbahn um weitere 15° C erreicht. Der Verdampfungs- und Kondensationstemperaturbereich der flüchtigen Bestandteile an der Folienoberfläche (Weichmacher, Stabilisatoren und Gleitmittel) wurde schnell durchlaufen, so daß keinerlei Kondensatbildung auftrat und eine fleckenfreie Folie erhalten wurde.

Auf Reinigungswalzen für Kondensatrückstände auf den Abzugswalzen konnte verzichtet werden.

## Patentansprüche

1. Verfahren zum Herstellen von Kunststoffolien, insbesondere PVC-Folien, durch Kalandrieren, bei dem die Folie nach Verlassen des Kalanders auf Abzugswalzen aufläuft, **dadurch gekennzeichnet,** daß die Folie durch Aufblasen von Druckluft in direkten Kontakt mit dem Mantel wenigstens einer der Abzugswalzen gebracht und unter Aufrechterhaltung dieses Kontaktes schnell auf eine die Kondensatbildung verhindernde Temperatur unterhalb der Kondensationstemperatur der flüchtigen, von der Folienoberfläche abgegebenen Bestandteile gekühlt wird.

## Claims

1. Process for the production of plastics films, especially PVC films, by calendering, the film arriving at take-off rolls after leaving the calender,
   **characterized in that**
   a direct contact is established between the film and the shell of at least one of the take-off rolls by blowing compressed air against said film and - while this contact is maintained - the film is rapidly cooled down to a temperature at which condensation is avoided and which is below the condensation temperature of the volatile components at the film surface.

## Revendications

1. Procédé pour la production de feuilles en matière plastique, surtout de feuilles en PVC, par calandrage, pendant lequel la feuille, après sa sortie de la calandre, passe sur les cylindres de tirage,
   caractérisée en ce que
   la feuille est, par soufflage d'air comprimé, mise en contact direct avec la chemise d'au moins un des cylindres de tirage et, qu'en maintenant ce contact, elle est rapidement refroidie à une température empêchant une condensation et étant au-dessous de la température de condensation des composants volatils dégagés par la surface de la feuille.

Fig.1